# EUROPEAN PATENT SPECIFICATION

(11) **EP 1 363 789 B1**
(45) Date of publication and mention of the grant of the patent: **14.07.2004**
(21) Application number: 02700247.6
(22) Date of filing: 18.02.2002
(51) Int. Cl.: B60C 11/11, B60C 11/12, B60C 101/00

(54) **DIRECTIONAL TREAD PATTERN FOR WINTER TIRE**
LAUFRICHTUNGSGEBUNDENES LAUFFLÄCHENPROFIL FÜR EINEN WINTERREIFEN
MOTIF DE BANDE DE ROULEMENT DIRECTIONNELLE POUR PNEUMATIQUES D'HIVER

(30) Priority: 28.02.2001 EP 01830144; 29.03.2001 US 279431 P
(43) Date of publication of application: 26.11.2003
(73) Proprietor: Pirelli Pneumatici S.p.A., 20126 Milano (IT)
(72) Inventor: COLOMBO, Gianfranco, I-20049 Concorrezzo (IT); ISOLA, Mario, I-20123 Milano (IT)
(74) Representative: Giannesi, Pier Giovanni
(86) International application number: PCT/EP2002/001691
(87) International publication number: WO 2002/068221

(56) References cited:
- EP-A- 0 485 883
- US-A- 5 759 313
- "RICHTUNGSGEBUNDENE PFEILREIFEN FUER DIE GOLF-KLASSE" GUMMIBEREIFUNG,DE,BIELEFELDER VERLAGSANSTALT KG. BIELEFELD, vol. 68, no. 3, 1 March 1992 (1992-03-01), pages 71-73, XP000263848 ISSN: 0017-5609
- PATENT ABSTRACTS OF JAPAN vol. 1995, no. 02, 31 March 1995 (1995-03-31) & JP 06 305308 A (TOYO TIRE & RUBBER CO LTD), 1 November 1994 (1994-11-01)
- PATENT ABSTRACTS OF JAPAN vol. 010, no. 191 (M-495), 4 July 1986 (1986-07-04) & JP 61 036002 A (BRIDGESTONE CORP), 20 February 1986 (1986-02-20)

## Description

The present invention relates to tyres for motor vehicles, particularly directional tyres for use on snow-covered ground.

A tyre, in its most general form, comprises: a carcass structure including a central crown portion and two axially opposing sidewalls terminating in a pair of beads for securing the tyre to a wheel rim, a belt structure associated coaxially with the carcass structure and a tread band extending coaxially around the belt structure.

The tread band is generally moulded with a relief pattern formed by a plurality of longitudinal and transverse grooves which, in combination, give rise to a plurality of blocks distributed according to different types of configurations, for example along a central area extending across the equatorial plane and in at least two shoulder areas extending in axially opposed positions on either side of said central area.

Of particular importance for the purposes of travel on a snow-covered surface is the presence, in the blocks, of suitable sipes, in other words of a closely spaced set of incisions or small grooves which are circumferentially distributed and orientated essentially transversely with respect to the rolling direction. The function of said sipes is essentially to collect and retain the snow in an efficient way, since it has been shown to be generally convenient to exploit the friction of snow on snow to ensure a good grip of a tyre on snow-covered ground.

One type of winter tyre marketed by the Applicant has, in the tread band, a pair of rectilinear circumferential grooves, arranged symmetrically with respect to the equatorial plane of the tyre and spaced apart from each other by a distance essentially equal to half of the total width of the tread band.

Said circumferential grooves are combined with two sets of transverse grooves, each of which extends with a progressively increasing inclination from the outer edge of the tread band to a point on the equatorial plane.

The transverse grooves of said two sets converge symmetrically on the equatorial plane of the tyre in a predetermined preferred rolling direction, and have their vertices interleaved with each other alternately along the perimetric extension of the tread band in correspondence of the equatorial plane.

In said tread band, the configuration of the transverse grooves is such as to promote good characteristics of traction because of the mutual convergence of the grooves in the rolling direction.

Moreover, the circumferential rectilinear grooves enable water to be removed efficiently from the footprint while the tyre is running on a wet surface, thus preventing the onset of the well-known and dangerous phenomenon of aquaplaning.

The traction and the overall behaviour in travel on a snow-covered surface are improved by the provision of closely spaced sipes in the blocks obtained by the intersection of the longitudinal grooves with the transverse ones, and by suitable rectilinear grooves, associated with the transverse grooves, in the space delimited by the two circumferential grooves, each of said rectilinear grooves extending in the circumferential direction for a short distance from the corresponding transverse groove.

Patent EP-773,116, in the name of the same Applicant, discloses a tyre for snow-covered surfaces, provided with a tread band in which the circumferential grooves are formed by a sequence of portions orientated obliquely with respect to the circumferential direction of the tyre. Said oblique portions converge symmetrically towards the equatorial plane according to a direction opposite to the direction of convergence of the transverse grooves.

Each of the oblique portions of the circumferential grooves extends between two consecutive transverse grooves and delimits respectively the opposing circumferential edges of a centre block and of a shoulder block.

In this solution, each of the centre and shoulder blocks has a corner projecting into the inside of the corresponding circumferential groove with respect to the opposite corner of the block immediately following it.

In this situation, the projecting corners of the centre blocks act as teeth which provide the grip on snow in traction, while the projecting corners of the shoulder blocks produce this effect during braking.

In order to increase the grip on snow, said tyre also has a groove of trapezoidal shape extending partially between two adjacent blocks belonging to the same row of centre blocks.

Said groove passes through the transverse groove between the two centre blocks and has an inner circumferential edge and an outer circumferential edge which diverge from each other at angles preferably comprised from 3° to 15°, in the opposite direction to the rolling direction.

However, since the tread pattern for a tyre suitable for running on snow-covered ground has a considerable number of blocks, it inevitably causes a certain degree of noise when running on dry roads because of the successive impacts of the frontal profiles of the blocks on the ground.

Document US-5,759,313, corresponding to the preamble of claim 1, relates to a pneumatic tyre permitting a vehicle to travel excellently both in the on-road condition and in the off-road condition without changing the tyres. To achieve such an object, said document discloses a tyre wherein sub-grooves extending at least in the widthwise direction of the tyre are arranged in the circumferential direction thereof at a predetermined pitch in a center portion of a tread surface and both of shoulder portions thereof on both sides of the center portion, characterized in that both the width and depth of the sub-grooves in both of the shoulder portions are set larger than those of the sub-grooves in the center position, a ratio of the area of the sub-grooves in both of the shoulder portions to that of the tread surface being set larger than a ratio of the area of the sub-grooves in the center portion to that of the tread surface.

In considering the cited prior art, the Applicant has perceived the necessity of providing a tyre for snow-covered ground which can simultaneously ensure a good grip on said type of ground, a satisfactory noiseness when running on dry roads, and a high wear-resistance of the tread blocks.

The Applicant has found that said performances can be achieved by using profiles of the frontal sides of adjacent blocks, belonging to the same row, which are such as to produce, when combined in pairs, gripping means with an ondulated profile, together with variations of said profiles in order to attenuate the impact of each block on the ground in conditions of rolling on a dry surface.

Therefore, according to a first aspect the present invention concerns a winter tyre for vehicle wheels, comprising: a carcass structure including a central crown portion and two axially opposing sidewalls; a belt structure associated coaxially with the carcass structure; and a tread band extending coaxially around the belt structure, moulded with a relief pattern which comprises at least one row of blocks separated by transverse grooves intersecting two lateral circumferential grooves.

Each block of said at least one row of blocks is essentially delimited by two longitudinal sides in the circumferential direction and by two transverse sides, also referred to as "frontal profiles" in the following text, respectively one at the front and one at the rear with respect to a predetermined rolling direction.

The principal characteristics of the tread band according to the invention are as follows:
a) said blocks are formed of two portions axially adjacent with respect to a longitudinal axis;
b) said transverse grooves between two circumferentially adjacent blocks are provided with a widening of the cross section, said widening having an essentially curvilinear profile in at least one of said two axially adjacent portions; said widenings of the cross section between blocks being intended to trap the snow;
c) the facing frontal profiles of circumferentially adjacent blocks are formed by at least two successive curvilinear portions which are different from each other, to form means of attenuating the noise originating from the contact of the tread band with the ground during the travel of the tyre.

The term "longitudinal axis" denotes an axis parallel to or possibly aligned with the equatorial plane of the tyre.

According to a preferred embodiment of the invention, all the blocks of said at least one row of blocks are shaped in the same way.

Preferably, said two curvilinear portions follow each other axially in the frontal profile of a first portion of a first block with a sequence which is the inverse of that present in the corresponding frontal profile of the other, axially adjacent, portion of said first block. Preferably, said curvilinear portions follow each other axially in the frontal profile of the two axially adjacent portions of a first block with a sequence which is the inverse of that present in the facing frontal profile of the two corresponding axially adjacent portions of a second block which is circumferentially adjacent to the first.

Preferably, the frontal profile of each portion of the blocks comprises a first rectilinear portion followed by said two curvilinear portions.

Preferably, said two curvilinear portions are formed by a first curvilinear portion which is concave towards the inside of the block and by a second curvilinear portion having a curvature opposite to that of the first portion.

Preferably, the axially adjacent portions of the blocks of said at least one row of blocks are respectively contained in two axially adjacent rows of imaginary parallelograms in which:
- the longitudinal sides of said parallelograms are parallel to the equatorial plane of the tyre and partially coincide with the longitudinal sides of the blocks;
- the transverse sides of the parallelograms of each row are parallel to each other, converge towards the equatorial plane and partially coincide with the transverse sides of the blocks;
- the ratio between the minor diagonal and the major diagonal of said parallelograms is preferably in the range from 0.50 to 0.70.

Preferably, each of the two adjacent portions of said blocks is essentially in the shape of an irregular rhombus, with the major diagonal inclined with respect to the equatorial plane at an angle in the range from 25° to 55°.

Preferably, said two portions of each block are joined together along the adjacent longitudinal side.

Preferably, at least one of the two frontal profiles of each block has a concavity located in a central position, in other words extending essentially across the equatorial plane of the tyre.

Said concavity advantageously forms a further means by which the tread band according to the invention can trap snow and, therefore, as stated above, provide an grip of the tyre when running on snow-covered ground.

In a preferred embodiment of the invention, the tread band comprises a centre row of blocks, located across the equatorial plane and contained between two circumferential grooves, and two lateral rows of blocks, formed between said two circumferential grooves and the edges of the tread band.

Each block of the centre row, as mentioned above, comprises the aforesaid two axially adjacent portions joined together in corrispondence of a longitudinal axis passing through the centre of the block.

The blocks of said lateral rows, also called shoulder blocks, can have various shapes. Said shapes can be identical to those of the blocks of the centre row or can have polygonal shapes different from those of the centre blocks.

Preferably, the tread pattern present on one side of the equatorial plane is a mirror image of that present on the other side.

In a preferred embodiment of the invention, curvilinear profiles of the centre blocks and of the lateral blocks face each other and are opposed to each other along the circumferential grooves. Said opposing curvilinear profiles cause the formation of a widening of the circumferential groove which can trap the snow more efficiently, with the advantages described above.

Preferably, each of the centre and shoulder blocks has a plurality of sipes in it.

Further characteristics and advantages will be made clearer by the following description of an example of a preferred embodiment of a tyre according to the invention, provided for guidance and without restrictive intent, with reference to the attached drawings, in which:
- Figure 1 shows a partial cross-sectional view of a tyre according to the invention;
- Figure 2 shows a development, in plan view from the top, of the tread band of the tyre of Figure 1;
- Figure 3 shows an enlargement of a portion of Figure 2;
- Figure 4 shows some details of a block illustrated in the partial plan view of Figure 2;
- Figure 5 shows a comparison between portions of the profile of a block according to the invention and corresponding portions of the profile of a known block.

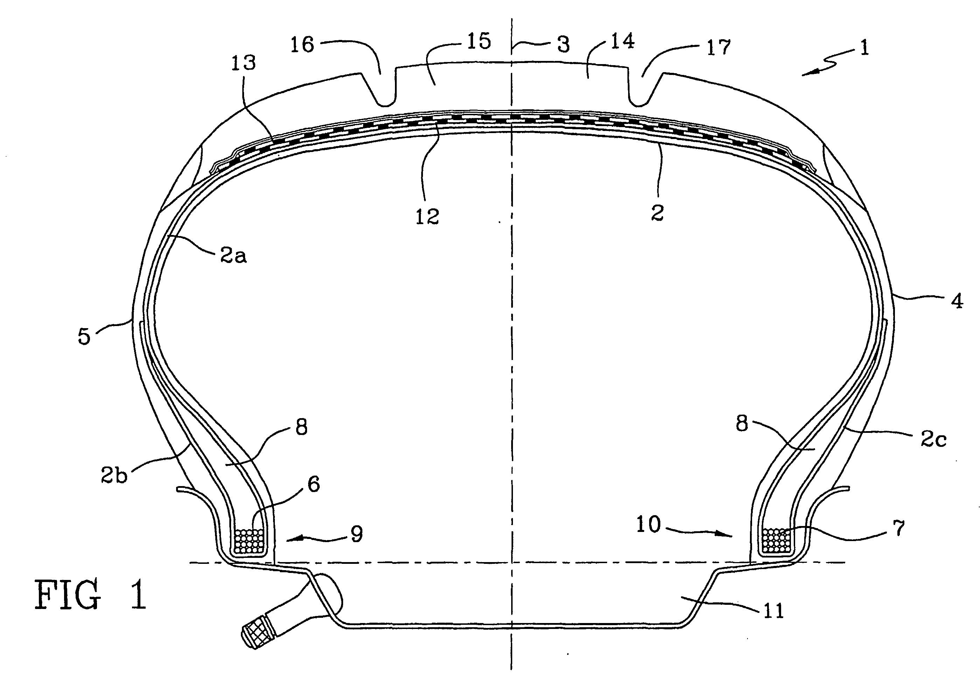

With reference to Figure 1, reference sign 1 indicates in a general way a tyre for motor vehicles according to the invention, for example a tyre of the 155/70 R13 size.

The tyre 1 comprises a carcass structure 2, including a central crown portion 3 and two sidewalls 4, 5, said carcass structure 2 being provided with a reinforcing ply 2a whose opposite ends 2b, 2c are wound around corresponding bead cores 6, 7.

An elastomeric filler 8 is applied to the radially outer perimetric edge of the bead cores 6, 7 which are located at the radially inner edges of said sidewalls 4, 5, said elastomeric filler being positioned in the space formed between the reinforcing ply 2a and the corresponding ends 2b, 2c of said reinforcing ply 2a.

As is known, the opposing areas of the tyre 1, each comprising a bead core 6, 7 and the filler 8, form what are known as beads, indicated as a whole by 9 and 10, intended to secure the tyre 1 on a corresponding mounting rim 11 of the wheel of a vehicle.

A belt structure 12, comprising one or more reinforcing strips 13 made from textile or metal cords incorporated in a specified mixture, is associated coaxially with the aforesaid carcass structure 2.

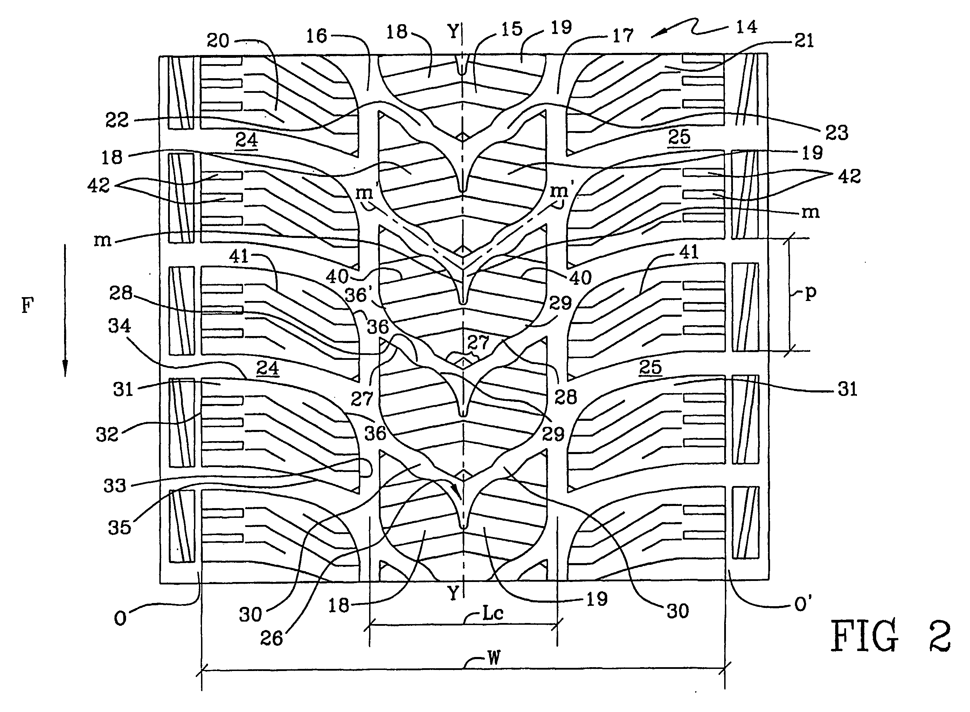

A tread band 14, in the thickness of which a pattern shown in more detail in Figure 2 is cut, is applied in a known way to the belt structure 12.

The tread band 14 according to the invention is particularly suitable for snow-covered surfaces.

As shown in Figure 2, the tread band 14 comprises a central row 15 of blocks axially delimited between two circumferential grooves 16, 17.

The centre row 15 comprises blocks, each of which is formed by two portions 18, 19 which are axially adjacent to each other on a longitudinal axis which, in the illustrated embodiment, belongs to the equatorial plane Y-Y of the tyre.

Said tread band 14 also comprises two rows of shoulder blocks 20, 21, located on opposite sides of the centre row 15. Additionally, the blocks of the shoulder rows 20, 21 are delimited externally in the axial direction by the shoulder disconnection grooves O-O' of the tread band 14.

The transverse grooves of the centre row 15 have two branches 22, 23 whose mid-line axes m-m' converge towards the equatorial plane with an inclination lying in the rolling direction of the tyre which is indicated by the arrow F in Figure 2.

Said transverse grooves of the centre row 15 intersect the circumferential grooves 16, 17 and continue to form the transverse grooves 24 and 25 of the shoulder rows 20 and 21 respectively.

Preferably, the circumferential grooves 16, 17 have mid-line axes parallel to the equatorial plane. Preferably, said grooves have a depth in the range from 6 to 12 mm. The width of the circumferential grooves 16, 17 is preferably in the range from 4 to 8 mm.

Preferably, the transverse grooves 22-25 have a depth in the range from 4 to 12 mm. Preferably, they have a width in the range from 3 to 6 mm.

Preferably, both the transverse and the circumferential grooves have the same depth, for example of 8 mm.

As clearly shown in Figure 2, the portion of the tread band 14 located on the left of the equatorial plane Y-Y is a mirror image of the part located on the right of said equatorial plane.

Each block of the tread band according to the invention comprises two longitudinal sides and two transverse sides, respectively the front side and the rear side, with respect to the direction of travel.

Each block of the centre row 15 is formed by at least two portions 18, 19 which are axially adjacent with respect to a longitudinal axis; each portion has an irregular rhomboidal shape.

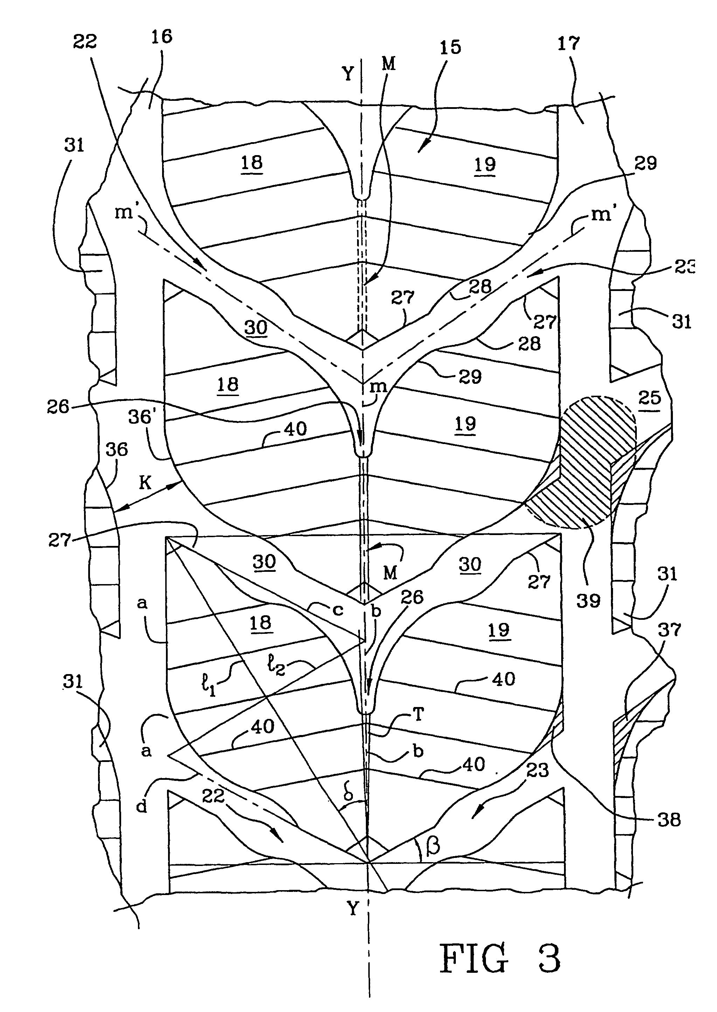

In greater detail, as shown in Figure 3, each portion 18, 19 of a block of the centre row 15 is contained in a regular parallelogram formed by a pair of longitudinal sides "a", "b", parallel to the equatorial plane, and by a pair of transverse sides "c", "d", inclined at equal angles with respect to the equatorial plane. Said parallelogram has a pair of diagonals l₁, l₂.

The two parallelograms delimiting each block of the centre row have in common the side "b" aligned along the equatorial plane.

Each portion 18, 19 of the block 15 departs from the aforesaid parallelogram in the following ways:
- the axially outer longitudinal side of each portion of the block is aligned with the outer side "a" of the parallelogram and its length is lower than "a". Preferably, the length of the axially outer longitudinal side of each portion of the block does not exceed 75% of the length of "a";
- the axially inner longitudinal side of each portion of the block is aligned with the side "b" of the parallelogram and has a length substantially equal to that of the outer axially longitudinal side;
- the transverse sides of each portion of the block have a portion of predetermined length, preferably not exceeding 35% of the length of "c", in common with the transverse sides of the parallelogram;
- the maximum extension of each portion of the block is equal to the longer diagonal l₁ of the parallelogram; preferably, said diagonal l₁ is inclined with respect to the equatorial plane at an angle δ whose value is in the range from 25° to 55°; preferably, said value does not exceed 45°;
- the maximum transverse dimension of each portion of the block is lower than the length of the smaller diagonal l₂ of the parallelogram. Preferably, said maximum transverse dimension of each portion of the block is not greater than 75% of l₂;
- the overall shape of each portion of block is a sharp ovoid shape, similar to that of a leaf, inscribed in a parallelogram in which the ratio l₂/l₁ between the smaller diagonal and the longer diagonal is preferably in the range from 0.50 to 0.70.

It was stated above that the axially inner longitudinal sides of the two portions of block are aligned along the central longitudinal axis of the block (in the described example they are aligned on the equatorial plane). However, it should be noted that, for the purposes of the present invention, the block 15 is considered to be a single block both when it comprises two separate axially adjacent portions separated by a sipe and when, alternatively, block 15 is formed by the aforesaid two separate portions joined together along their axially inner longitudinal side which is common to both of said portions.

In the case of separate portions, the depth of the separating sipe is preferably in the range from 4 to 12 mm. Preferably, the width of said sipe does not exceed 2 mm.

In particular, it should be noted that, regardless of the configuration used, the two axially adjacent portions of each centre block, joined together in this way, form, at least on one of the two frontal profiles of the block, a concavity 26 defined below in greater detail.

Advantageously, the shape and dimensions of the centre block 15 help to provide the block with sufficient deformability to give it advantageous properties of adaptation to particularly rough grounds.

It should be noted that the frontal profiles of both the adjacent portions of each centre block have a particular configuration which comprises at least three distinct portions, all three being shaped differently from each other.

For example, the enlargement of Figure 3 shows that the frontal profile of each portion 18, 19 of the centre block comprises a first rectilinear portion 27 and two successive curvilinear portions 28, 29, one being concave and the other convex towards the outside.

Preferably, said curvilinear portions are parabolic and/or circular arcs.

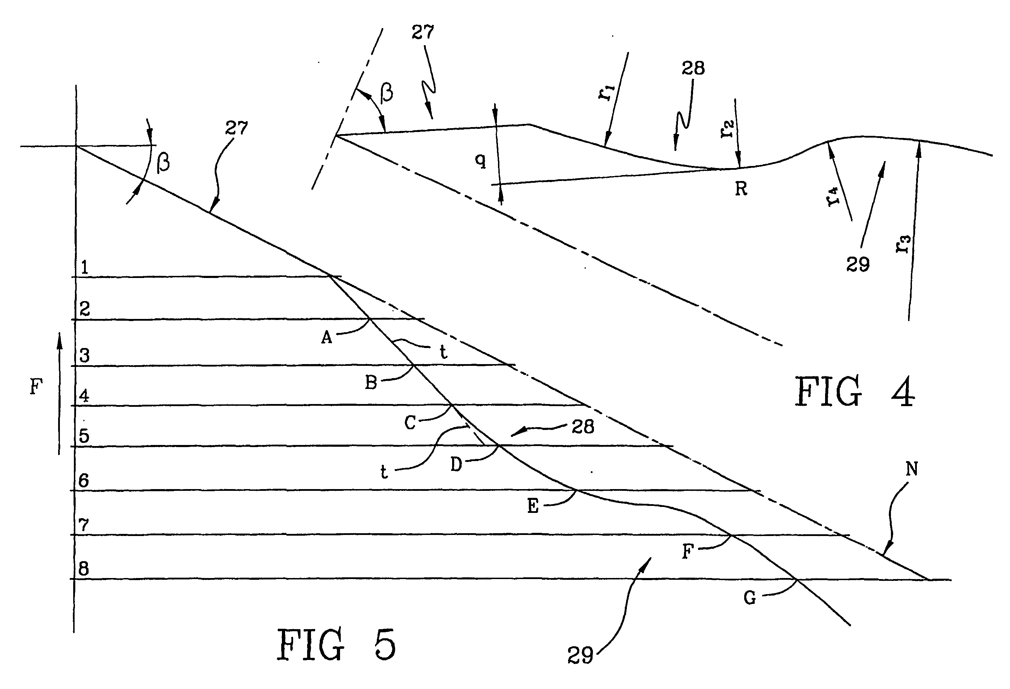

As shown in Figures 3 and 4, the first rectilinear portion 27 is inclined with respect to a plane perpendicular to the equatorial plane at an angle β whose value is in the range from 20° to 35°.

Preferably, the first and the second curvilinear portions are both shaped in the form of successive portions of circular arcs.

More precisely, the first curvilinear portion 28 comprises two circular arcs, having a first and second radius r₁, r₂, while the second curvilinear portion 29 comprises a third circular arc with a radius r₃ linked to said second circular arc by a fourth circular arc with a radius r₄.

Preferably, the configuration of the frontal profile of a portion of the block has the following additional characteristics:
- the ratio between the radii r₁ and r₂ of the first and second circular arcs is in the range from 1 to 6;
- the ratio between the radii r₃ and r₂ of the third and second circular arcs is in the range from 1 to 4;
- the link radius r₄ has the smallest value of all the radii mentioned above;
- the distance "q" between the first rectilinear portion and the parallel line, tangent to the second circular arc at the point R of maximum extension of the cavity formed by said curvilinear portion 28, measured perpendicularly to said rectilinear portion, is in the range from 1.5 to 3 mm.

It can be seen in Figures 2 and 3 that, in a given centre block, the three different portions 27, 28, 29, for example the portions of the frontal profile in the front of the portion 19 on the right of the equatorial plane, have a sequence which is the inverse, in the axial direction, of that of the three similar portions of the frontal profile in the rear of the corresponding circumferentially adjacent portion of block.

The same geometrical characteristic is repeated for the configuration of the portion 18 of the block on the left of the equatorial plane.

Said characteristic makes it possible to form a cross section widening 30 of curvilinear shape in each branch 22, 23 of the transverse groove of the centre row.

Preferably, said widening is circular in shape.

Preferably, said widening is located in an area substantially equidistant from the ends of each branch of said transverse groove.

The Applicant has found that the curvilinear shape of the cross section widening 30 advantageously maintains a sufficient resistance to both tearing and fatigue in the elastomeric material of the block.

Furthermore, said cross section widening 30 advantageously forms a gripping means which is particularly suitable for trapping snow, as indicated by the hatching in Figure 2.

Advantageously, each transverse groove of the centre row of the tread band has a further means of trapping snow formed by the aforesaid concavity 26 obtained in the centre of at least one of the two frontal profiles of each block.

Said concavity 26 preferably comprises a closed end with a linear or curvilinear profile, and side walls which are parallel to, or inclined with respect to, the equatorial plane. The side walls of said cavity 26 form the axially inner terminal portions of the frontal profiles of the two axially adjacent portions 18, 19 of each block.

The minimum transverse dimension of said cavity 26, measured perpendicularly to the equatorial plane, is preferably in the range from 7 to 15 mm.

Preferably, the transverse groove between two circumferentially adjacent blocks of the centre row has its point of maximum width, measured parallel to the equatorial plane, lying on the axis of the concavity 26.

Preferably, the ratio between the width of the transverse groove, at the cross section widening 30, and the width of the cavity 26 is in the range from 0.30 to 1. More preferably, said ratio is in the range from 0.40 to 0.90.

The blocks 31 of the lateral rows 20, 21 can have various shapes, provided that they are compatible with the shapes of the blocks of the centre row.

For the purposes of the invention, the most convenient shape of said blocks of the lateral rows is that shown in Figure 2.

In the embodiment shown in Figure 2, each block 31 of the shoulder rows 20, 21 is delimited by longitudinal sides 32, 33 parallel to the equatorial plane Y-Y, by transverse sides 34, 35 with a curvilinear profile, and by a curvilinear portion 36 linking the axially inner longitudinal side with one of the transverse sides.

In the example shown in Figure 2, the curvilinear portion 36 forms a link with the rear transverse side 34.

The shoulder blocks 31 follow each other circumferentially with a predetermined pitch "p"; in a tyre of the aforesaid measure, said value is preferably in the range from 20 to 35 mm.

The centre blocks and the adjacent shoulder blocks 31 are circumferentially staggered with respect to each other by a distance preferably equal to one half of the pitch.

Preferably, as shown in the enlargement in Figure 3, said staggering is produced in such a way that the curvilinear link 36 between a transverse side and a longitudinal side of a shoulder block 31 faces the curvilinear link 36' formed between a longitudinal side and a transverse side of the centre block.

In Figure 3, "K" indicates the minimum distance between said circular links 36, 36'.

The design of the centre blocks and of the shoulder blocks is obtained with curvilinear links which make the profiles of said blocks to depart from those of a rhomboidal shape which contain them.

Essentially, as indicated by the hatching in Figure 3, the aforesaid links 36, 36' remove a quantity of elastomeric material corresponding to the areas 37, 38 from the centre and shoulder blocks.

Advantageously, said design and arrangement of the blocks provides a localized widening of the lateral circumferential grooves 16, 17 and a consequent improvement in the trapping of snow between the blocks, as schematically shown by hatching in the area 39 of Figure 3.

In order to optimize the grip of the tread band according to the invention on snow-covered ground, each of the centre and shoulder blocks is provided with a plurality of notches, known to those skilled in the art as "sipes".

Preferably, the sipes of the axially adjacent portions 18, 19 of the blocks of the centre row 15 are parallel to each other in each portion, with direction different from the mid-line axes of the corresponding branches 22, 23 of the transverse grooves.

In greater detail, the axially adjacent portions 18, 19 of the centre blocks comprise a plurality of linear sipes 40, parallel to each other in each portion and inclined with respect to the equatorial plane at angles preferably in the range from 15° to 50°.

Preferably, the sipes of the blocks 31 of the shoulder rows 20, 21 have a different profile from that of the corresponding transverse grooves 24, 25.

More particularly, each of the shoulder blocks 31 comprises a plurality of sipes 41 generated by a sequence of three consecutive portions in the shape of a zigzag, with the intermediate portion inclined in the opposite direction to that of the sipes 40 provided in the adjacent portions of the blocks of the centre row 15.

The angle of inclination of the intermediate portions of the sipes 41 with respect to the equatorial plane Y-Y is preferably in the range from 40° to 60°.

The Applicant has found that the orientations of the sipes and of the transverse grooves improve the traction of the tyre according to the invention on snow, and do not have an adverse effect tyre noiseness when running on a dry surface.

In order to optimize the grip of the tread band on a snow-covered surface, both the shoulder blocks and the centre blocks can comprise notches 42 located in corrispondence of the axially outer longitudinal sides of the shoulder blocks, for example in the proximity of the ends of the sipes of said shoulder blocks.

Preferably, all the shoulder blocks comprise said notches in order to trap snow at the end of each shoulder block.

Said notches are distributed in a substantially uniform way with an orientation which is preferably perpendicular to the equatorial plane of the tyre.

Preferably, the notches 42 have a depth which is lower than the depth of the sipes.

Preferably, the notches 42 have a width which is greater than the width of the sipes.

In an example of embodiment, the notches 42 have a width and a depth of 2 mm. The ratio between the depth of the notches and that of the sipes is 0.25.

Additionally, in order to obtain better traction of the tyre on snow-covered surfaces, the ratio (Fig. 2) between the axial width "L_{c}" of the row of centre blocks 15 and the total width "W" of the tread band, measured between the edges of the tread, is preferably not greater than 0.33.

In a further embodiment of the invention, the blocks 31 of the shoulder row 21 are symmetrically arranged with respect to the blocks 31 of the shoulder row 22; in other words they have an orientation which is rotated through 180° in the plane in which they lie with respect to the orientation of the mirror symmetry arrangement.

The tyre according to the invention has served to decrease the noise of running on a dry surface.

The Applicant considers that one of the factors which may have contributed to the achievement of improved noiseness of the tyre according to the invention may be the particular profile of the transverse sides of the centre blocks.

To provide a better understanding of the possible improvements in terms of noiseness, Figure 5 shows the frontal profile of a conventional block, having a rectilinear profile N, and the frontal profile of a block according to the invention, in the condition in which successive points of the profiles of said blocks touch the ground during the progressive advance of the tyre in the rolling direction F.

The progressive advance of the tyre on the ground is represented by the lines 1-8, all located at equal distance from each other.

As shown in Figure 5, in the case of a block having a profile N of the rectilinear type along its whole transverse extension, portions of identical shape and length progressively come into contact with the ground. Therefore, the frontal profiles in the front of the block strike the ground in succession at a single specific frequency which is a source of noise.

In the case of the invention, on the other hand, it may be noted that the contact with the ground of a portion 18, 19 of the block involves portions of identical inclination and length (for example the portions AB and BC), followed by a portion CD, which differs in both inclination and length from the preceding portions, by a portion DE which has a different inclination from, and is longer than, the preceding ones, followed by a portion EF with a configuration and linear dimension which is greater than the preceding ones and with a profile which is completely different from the preceding ones, and then by a portion FG which is different from and shorter than the preceding one.

Therefore, the Applicant considers it reasonable to assert that the contact with the ground of the transverse side of a block according to the invention does not give rise to a repetitive phenomenon such as that found in the case of a rectilinear profile N according to the prior art.

This could therefore be responsible for the improved noiseness which has been found in the tread band according to the invention.

The tread band according to the invention can be made with a number of rows of blocks greater than that described above.

For example, in a further embodiment which is not illustrated, the tread band can comprise, in addition to the central row of blocks 15 and to the two lateral shoulder rows 20, 21 (as shown in Figure 2), two further intermediate rows of blocks, each interposed between the centre row and the shoulder row.

Additionally, the design and arrangement of the blocks of the intermediate rows can be such as to permit the aforesaid localized widening of the circumferential grooves, resulting in improved traction of the tyre on a snow-covered surface, the whole as shown schematically in Figure 3 with reference to the hatched area 39.

It should also be noted that the blocks of the intermediate rows can have configurations identical to those of the centre row, or could have polygonal profiles different from those described.

## Claims

1. Tyre (1) for vehicle wheels, comprising: a carcass structure (2) which includes a central crown portion (3) and two sidewalls (4, 5) at the sides of the equatorial plane (Y-Y); a belt structure (12) coaxially associated with the carcass structure (2); a tread band (14) extending coaxially around said belt structure (12), moulded with a relief pattern which comprises at least one row (15) of blocks separated by transverse grooves having two branches (22, 23) intersecting two circumferential grooves (16, 17), the blocks of said at least one row (15) being formed by two portions (18, 19) which are axially adjacent with respect to a longitudinal axis and each block of said at least one row (15) of blocks being delimited by two longitudinal sides in the circumferential direction and by two transverse sides, respectively a front transverse side and a rear transverse side with respect to a predetermined rolling direction, each transverse side having two frontal profiles being formed of at least two successive curvilinear portions (28, 29) which are different from each other,
**characterized in that** each of said two branches (22, 23) is provided with a cross section widening (30) having a substantially curvilinear profile in each of the two axially adjacent portions (18, 19) of two circumferentially adjacent blocks, said cross section widening (30) being located in an area substantially equidistant from the ends of said branches (22, 23).

2. Tyre according to Claim 1, **characterized in that** the curvilinear portions (28, 29) of the frontal profiles of the front transverse side of a first block of said at least one row (15) are arranged in a sequence which is the inverse to the sequence of the curvilinear portions (28, 29) of the frontal profiles of the rear transverse side of a second block circumferentially adjacent to said first block.

3. Tyre according to Claim 1, **characterized in that** said frontal profiles comprise a first rectilinear portion (27) followed by said at least two curvilinear portions (28, 29).

4. Tyre according to Claim 1, **characterized in that** said at least two curvilinear portions (28, 29) are formed by a first curvilinear portion which is concave towards the inside of the block and by a second curvilinear portion with a curvature opposite to that of said first curvilinear portion.

5. Tyre according to Claim 4, **characterized in that** said first curvilinear portion consists of a first circular arc and a second circular arc.

6. Tyre according to Claim 5, **characterized in that** the ratio between the radius of said first and said second circular arcs are in the range from 1 to 6.

7. Tyre according to Claim 4, **characterized in that** said second curvilinear portion consists of a third circular arc.

8. Tyre according to Claim 5 and 7, **characterized in that** the ratio between the radius of said third and said second circular arcs are in the range from 1 to 4.

9. Tyre according to Claim 1, **characterized in that** it comprises blocks in which said two portions (18, 19) axially adjacent with respect to the longitudinal axis are symmetrical.

10. Tyre according to Claim 1, **characterized in that** the longitudinal axis of said two portions (18, 19) of each block is aligned on the equatorial plane (Y-Y) of the tyre.

11. Tyre according to Claim 1, **characterized in that** said two portions (18, 19) of each block are contained in two axially adjacent imaginary rows of parallelograms in which:
• the longitudinal sides (a, b) of the parallelograms are parallel to the equatorial plane (Y-Y);
• the transverse sides (c, d) of the parallelograms are parallel to each other, converge towards the equatorial plane (Y-Y) and partially coincide with the frontal profiles of the blocks.

12. Tyre according to Claim 11, **characterized in that** the ratio between the smaller diagonal (l₂) and the greater diagonal (l₁) of said parallelograms is in the range from 0.5 to 0.7.

13. Tyre according to Claim 1, **characterized in that** each of the two adjacent portions of the blocks of said at least one row is essentially in the shape of a rhombus, with the greater diagonal (l₁) converging on the equatorial plane at an angle in the range from 25° to 55°.

14. Tyre according to Claim 13, **characterized in that** the two greater diagonals (l₁) of the two substantially rhomboidal shapes (18, 19) converge symmetrically with respect to the longitudinal axis of the block.

15. Tyre according to Claim 1, **characterized in that** each branch (22, 23) comprises a cavity (26) on at least one of the frontal profiles of two circumferentially adjacent blocks, said cavity (26) being located in the centre of the transverse groove.

16. Tyre according to Claim 1, **characterized in that** the longitudinal axis of said at least one row (15) is aligned on the equatorial plane (Y-Y).

17. Tyre according to Claim 1, **characterized in that** it comprises two lateral rows (20, 21) of blocks (31) between the circumferential grooves (16, 17) delimiting the centre row (15) and the edges (O, O') of the tread band.

18. Tyre according to Claim 15, **characterized in that** curvilinear profiles (36, 36') of the centre blocks (18, 19) and of the lateral blocks (31) are positioned opposite each other along the circumferential grooves (16, 17), said curvilinear profiles (36, 36') opposite each other forming a widening (39) of the circumferential grooves (16, 17).

19. Tyre according to Claim 1, **characterized in that** all the blocks comprise sipes.

20. Tyre according to Claim 19, **characterized in that**, in the centre row (15), the sipes (40) of the first portion (18) of a block are parallel to each other and are inclined in the opposite direction to those (40) of the second portion (19) of the same block.

21. Tyre according to Claim 20, **characterized in that** the sipes (40, 41), the circumferential grooves (16, 17) and the transverse grooves (22, 23, 24, 25) have substantially the same depth.

## Patentansprüche

1. Reifen für Fahrzeugräder
- mit einem Karkassenaufbau (2), der einen zentralen Kronenabschnitt (3) und zwei Seitenwände (4, 5) auf den Seiten der Äquatorialebene (Y-Y) hat,
- mit einem Gurtaufbau (12) der koaxial mit dem Karkassenaufbau (2) verbunden ist, und
- mit einem Laufflächenband (14), das sich koaxial um den Gurtaufbau (12) erstreckt und mit einem Reliefmuster ausgeformt ist,
- - das wenigstens eine Reihe (15) von Blöcken aufweist, die durch Quernuten getrennt sind, welche zwei Zweige (22, 23) haben, welche zwei Umfangsnuten (16, 17) schneiden,
- - wobei die Blöcke der wenigstens einen Reihe (15) von zwei Abschnitten (18, 19) gebildet werden, die bezogen auf eine Längsachse axial benachbart sind,
- - wobei jeder Block der wenigstens einen Reihe (15) von Blöcken von zwei Längsseiten in der Umfangsrichtung und von zwei Querseiten, nämlich einer vorderen Querseite und einer hinteren Querseite bezogen auf eine vorgegebene Abrollrichtung begrenzt wird, und
- - wobei jede Querseite zwei frontale Profile hat, die von wenigstens zwei aufeinanderfolgenden gekrümmten Abschnitten (28, 29) gebildet werden, die sich voneinander unterscheiden,
**dadurch gekennzeichnet,**
- **dass** jeder der beiden Zweige (22, 23) mit einer Querschnittsaufweitung (30) versehen ist, die ein im Wesentlichen gekrümmtes Profil in jedem der beiden axial benachbarten Abschnitte (18, 19) der beiden am Umfang benachbarten Blöcke hat,
- wobei die Querschnittsaufweitung (30) sich in einem Bereich befindet, der im Wesentlichen gleichen Abstand von den Enden der Zweige (22, 23) hat.

2. Reifen nach Anspruch 1, **dadurch gekennzeichnet, dass** die gekrümmten Abschnitte (28, 29) der frontalen Profile der vorderen Querseite eines ersten Blocks der wenigstens einen Reihe (15) in einer Folge angeordnet sind, die umgekehrt zur Folge der gekrümmten Abschnitte (28, 29) der frontalen Profile der hinteren Querseite eines zweiten Blocks ist, der am Umfang zu dem ersten Block benachbart ist.

3. Reifen nach Anspruch 1, **dadurch gekennzeichnet, dass** die frontalen Profile einen ersten geradlinigen Abschnitt (27) aufweisen, auf den wenigstens zwei gekrümmte Abschnitte (28, 29) folgen.

4. Reifen nach Anspruch 1, **dadurch gekennzeichnet, dass** die wenigstens zwei gekrümmten Abschnitte (28, 29) von einem ersten gekrümmten Abschnitt, der zur Innenseite des Blocks hin konkav ist, und von einem zweiten gekrümmten Abschnitt mit einer Krümmung gebildet werden, die zu der des ersten gekrümmten Abschnitts entgegengesetzt ist.

5. Reifen nach Anspruch 4, **dadurch gekennzeichnet, dass** der erste gekrümmte Abschnitt aus einem ersten Kreisbogen und einem zweiten Kreisbogen besteht.

6. Reifen nach Anspruch 5, **dadurch gekennzeichnet, dass** das Verhältnis zwischen dem Radius des ersten Kreisbogens und dem des zweiten Kreisbogens in einem Bereich von 1 bis 6 liegt.

7. Reifen nach Anspruch 4, **dadurch gekennzeichnet, dass** der zweite gekrümmte Abschnitt aus einem dritten Kreisbogen besteht.

8. Reifen nach Anspruch 5 und 7, **dadurch gekennzeichnet, dass** das Verhältnis zwischen dem Radius des dritten Kreisbogens und dem des zweiten Kreisbogens in einem Bereich von 1 bis 4 liegt.

9. Reifen nach Anspruch 1, **dadurch gekennzeichnet, dass** er Blöcke aufweist, in denen die beiden Abschnitte (18, 19), die bezogen auf die Längsachse axial benachbart sind, symmetrisch sind.

10. Reifen nach Anspruch 1, **dadurch gekennzeichnet, dass** die Längsachse der beiden Abschnitte (18, 19) eines jeden Blocks auf der Äquatorialebene (Y-Y) fluchtend ausgerichtet ist.

11. Reifen nach Anspruch 1, **dadurch gekennzeichnet, dass** die beiden Abschnitte (18, 19) eines jeden Blocks in zwei axial benachbarten imaginären Reihen von Parallelogrammen enthalten sind, wobei
- die Längsseiten (a, b) der Parallelogramme parallel zur Äquatorialebene (Y-Y) sind und
- die Querseiten (c, d) der Parallelogramme parallel zueinander sind, zu der Äquatorialebene (Y-Y) hin konvergieren und teilweise mit den frontalen Profilen der Blöcke zusammenfallen.

12. Reifen nach Anspruch 11, **dadurch gekennzeichnet, dass** das Verhältnis zwischen der kleineren Diagonalen (l₂) und der größeren Diagonalen (l₁) der Parallelogramme im Bereich von 0,5 bis 0,7 liegt.

13. Reifen nach Anspruch 1, **dadurch gekennzeichnet, dass** jeder der beiden benachbarten Abschnitte der Blöcke der wenigstens einen Reihe im Wesentlichen die Form eines Rhombus hat, wobei die größere Diagonale (l₁) auf der Äquatorialebene mit einem Winkel im Bereich von 25° bis 55° konvergiert.

14. Reifen nach Anspruch 13, **dadurch gekennzeichnet, dass** die beiden größeren Diagonalen (l₁) der zwei im Wesentlichen rhomboidförmigen Abschnitte (18, 19) symmetrisch bezogen auf die Längsachse des Blocks konvergieren.

15. Reifen nach Anspruch 1, **dadurch gekennzeichnet, dass** jeder Zweig (22, 23) einen Hohlraum (26) an wenigstens einem der frontalen Profile der zwei am Umfang benachbarten Blöcke aufweist, wobei der Hohlraum (26) sich in der Mitte der Quernut befindet.

16. Reifen nach Anspruch 1, **dadurch gekennzeichnet, dass** die Längsachse der wenigstens einen Reihe (15) fluchtend auf der Äquatorialebene (Y-Y) ausgerichtet ist.

17. Reifen nach Anspruch 1, **dadurch gekennzeichnet, dass** er zwei seitliche Reihen (20, 21) von Blöcken (31) zwischen den Umfangsnuten (16, 17) aufweist, die die zentrale Reihe (15) und die Ränder (O, O') des Laufflächenbandes begrenzen.

18. Reifen nach Anspruch 15, **dadurch gekennzeichnet, dass** gekrümmte Profile (36, 36') der zentralen Blöcke (18, 19) und der seitlichen Blöcke (31) längs der Umfangsnuten (16, 17) einander gegenüberliegend angeordnet sind, wobei die einander gegenüberliegenden gekrümmten Profile (36, 36') eine Aufweitung (39) der Umfangsnuten (16, 17) bilden.

19. Reifen nach Anspruch 1, **dadurch gekennzeichnet, dass** alle Blöcke Lamellen aufweisen.

20. Reifen nach Anspruch 19, **dadurch gekennzeichnet, dass** in der zentralen Reihe (15) die Lamellen (40) des ersten Abschnitts (18) eines Blocks parallel zueinander und zu denen (40) des zweiten Abschnitts (19) des gleichen Blocks in der entgegengesetzten Richtung geneigt sind.

21. Reifen nach Anspruch 20, **dadurch gekennzeichnet, dass** die Lamellen (40, 41), die Umfangsnuten (16, 17) und die Quernuten (22, 23, 24, 25) im Wesentlichen die gleiche Tiefe haben.

## Revendications

1. Pneu (1) pour roues de véhicule, comprenant : une structure de carcasse (2) qui comprend une partie de sommet centrale (3) et deux flancs (4, 5) de part et d'autre du plan équatorial (Y-Y), une structure de ceinture (12) associée de façon coaxiale à la structure de carcasse (2), une bande de roulement (14) s'étendant de façon coaxiale autour de ladite structure de ceinture (12), moulée avec un motif en relief qui comprend au moins une rangée (15) de blocs séparés par des rainures transversales comportant deux branches (22, 23) qui coupent deux rainures circonférentielles (16, 17), les blocs de ladite au moins une rangée (15) étant formés par deux parties (18, 19) qui sont axialement adjacentes par rapport à un axe longitudinal et chaque bloc de ladite au moins une rangée (15) de blocs étant délimité par deux côtés longitudinaux dans la direction circonférentielle et par deux côtés transversaux, respectivement un côté transversal avant et un côté transversal arrière par rapport à une direction de roulement prédéterminée, chaque côté transversal ayant deux profils frontaux constitués d'au moins deux parties curvilignes successives (28, 29) qui sont différentes l'une de l'autre,
**caractérisé en ce que** chacune desdites deux branches (22, 23) est munie d'un élargissement de sa section (30) ayant un profil sensiblement curviligne dans chacune des deux parties axialement adjacentes (18, 19) de deux blocs circonférentiellement adjacents, ledit élargissement de section (30) étant situé dans une zone sensiblement à égale distance des extrémités desdites branches (22, 23).

2. Pneu selon la revendication 1, **caractérisé en ce que** les parties curvilignes (28, 29) des profils frontaux du côté transversal avant d'un premier bloc de ladite au moins une rangée (15) sont agencées selon une séquence qui est l'inverse de la séquence des parties curvilignes (28, 29) des profils frontaux du côté transversal arrière d'un deuxième bloc circonférentiellement adjacent audit premier bloc.

3. Pneu selon la revendication 1, **caractérisé en ce que** lesdits profils frontaux comprennent une première partie rectiligne (27) suivie par lesdites au moins deux parties curvilignes (28, 29).

4. Pneu selon la revendication 1, **caractérisé en ce que** lesdites au moins deux parties curvilignes (28, 29) sont constituées d'une première partie curviligne qui est concave vers l'intérieur du bloc et d'une deuxième partie curviligne ayant une courbure opposée à celle de ladite première partie curviligne.

5. Pneu selon la revendication 4, **caractérisé en ce que** ladite première partie curviligne est constituée d'un premier arc circulaire et d'un deuxième arc circulaire.

6. Pneu selon la revendication 5, **caractérisé en ce que** le rapport entre le rayon desdits premier et deuxième arcs circulaires est compris dans l'intervalle allant de 1 à 6.

7. Pneu selon la revendication 4, **caractérisé en ce que** ladite deuxième partie curviligne est constituée d'un troisième arc circulaire.

8. Pneu selon les revendications 5 et 7, **caractérisé en ce que** le rapport entre le rayon desdits troisième et deuxième arcs circulaires est compris dans l'intervalle allant de 1 à 4.

9. Pneu selon la revendication 1, **caractérisé en ce qu'**il comprend des blocs dans lesquels lesdites deux parties (18, 19) axialement adjacentes par rapport à l'axe longitudinal sont symétriques.

10. Pneu selon la revendication 1, **caractérisé en ce que** l'axe longitudinal desdites deux parties (18, 19) de chaque bloc est aligné sur le plan équatorial (Y-Y) du pneu.

11. Pneu selon la revendication 1, **caractérisé en ce que** lesdites deux parties (18, 19) de chaque bloc sont contenues dans deux rangées imaginaires de parallélogrammes axialement adjacentes dans lesquelles :
• les côtés longitudinaux (a, b) des parallélogrammes sont parallèles au plan équatorial (Y-Y) ;
• les côtés transversaux (c, d) des parallélogrammes sont parallèles entre eux, convergent vers le plan équatorial (Y-Y) et coïncident partiellement avec les profils frontaux des blocs.

12. Pneu selon la revendication 11, **caractérisé en ce que** le rapport entre la petite diagonale (l₂) et la grande diagonale (l₁) desdits parallélogrammes est compris dans l'intervalle allant de 0,5 à 0,7.

13. Pneu selon la revendication 1, **caractérisé en ce que** chacune des deux parties adjacentes des blocs de ladite au moins une rangée a essentiellement la forme d'un losange, dont la grande diagonale (1,) converge sur le plan équatorial en formant un angle compris dans l'intervalle allant de 25° à 55°.

14. Pneu selon la revendication 13, **caractérisé en ce que** les deux grandes diagonales (l₁) des deux formes sensiblement en losange (18, 19) convergent symétriquement par rapport à l'axe longitudinal du bloc.

15. Pneu selon la revendication 1, **caractérisé en ce que** chaque branche (22, 23) comprend une cavité (26) sur au moins l'un des profils frontaux de deux blocs circonférentiellement adjacents, ladite cavité (26) étant située au centre de la rainure transversale.

16. Pneu selon la revendication 1, **caractérisé en ce que** l'axe longitudinal de ladite au moins une rangée (15) est aligné sur le plan équatorial (Y-Y).

17. Pneu selon la revendication 1, **caractérisé en ce qu'**il comprend deux rangées latérales (20, 21) de blocs (31) entre les rainures circonférentielles (16, 17) délimitant la rangée centrale (15) et les bords (O, O') de la bande de roulement.

18. Pneu selon la revendication 15, **caractérisé en ce que** des profils curvilignes (36, 36') des blocs centraux (18, 19) et des blocs latéraux (31) sont positionnés en vis-à-vis les uns des autres le long des rainures circonférentielles (16, 17), lesdits profils curvilignes (36, 36') en vis-à-vis formant un élargissement (39) des rainures circonférentielles (16, 17).

19. Pneu selon la revendication 1, **caractérisé en ce que** tous les blocs comprennent des lamelles.

20. Pneu selon la revendication 19, **caractérisé en ce que**, dans la rangée centrale (15), les lamelles (40) de la première partie (18) d'un bloc sont parallèles entre elles et sont inclinées dans la direction opposée à celle des lamelles (40) de la deuxième partie (19) du même bloc.

21. Pneu selon la revendication 20, **caractérisé en ce que** les lamelles (40, 41), les rainures circonférentielles (16, 17) et les rainures transversales (22, 23, 24, 25) ont sensiblement la même profondeur.
